# EUROPÄISCHE PATENTSCHRIFT

(11) **EP 2 003 375 B1**
(45) Veröffentlichungstag und Bekanntmachung des Hinweises auf die Patenterteilung: **20.04.2011**
(21) Anmeldenummer: 07011498.8
(22) Anmeldetag: 12.06.2007
(51) Int. Cl.: F16J 9/26, C22C 37/08

(54) **Motorbauteil und Verwendung einer Gusseisenlegierung für ein Motorbauteil**
Motor component and application of a cast iron alloy for a motor component
Composant de moteur et utilisation d'un alliage de fonte pour un composant de moteur

(43) Veröffentlichungstag der Anmeldung: 17.12.2008
(73) Patentinhaber: Federal-Mogul Nürnberg GmbH, 90441 Nürnberg (DE)
(72) Erfinder: Kolodziej, Wojciech, 39-432 Gorzyce (PL); Skowron, Marek, 27-600 Sandomierz (PL); Marszalik, Kazimierz, 39-432 Gorzyce (PL); Jijina, Homi D., Novi MI 48375 (US); Pelsoeczy, Laszlo, 51399 Burscheid (DE); Lades, Klaus, 90459 Nürnberg (DE)
(74) Vertreter: HOFFMANN EITLE

(56) Entgegenhaltungen:
- EP-A- 0 473 007
- GB-A- 508 850
- GB-A- 623 360
- GB-A- 2 265 154
- US-A- 4 435 226

## Beschreibung

### Technisches Gebiet

Die Erfindung betrifft ein Motorbauteil sowie die Verwendung einer neuartigen Gusseisenlegierung für ein Motorbauteil.

Im Bereich der Verbrennungsmotoren ist es für verschiedene Teile und bestimmte Bereiche der betroffenen Teile erforderlich, besonders gute Verschleißeigenschaften zu gewährleisten. Dies betrifft beispielsweise Zylinderlaufbuchsen und Motorkolben. An den Motorkolben bedarf insbesondere der Bereich der Ringnuten einer Verstärkung zur Verbesserung des Verschleißverhaltens. Dies betrifft insbesondere auch Ringträger, die als zunächst getrennte Elemente an einem Motorkolben vorgesehen, beispielsweise eingegossen sein können.

### Stand der Technik

Für die beschriebenen Bereiche ist aus der DE 100 49 598 A1 ein hochlegierter austenitischer Gusseisenwerkstoff bekannt, der verschiedene Zusammensetzungen aufweisen kann.

Die DE 40 26 611 A1 lehrt für einen Bremskörper einen Werkstoff, der Zirkon enthalten kann.

### Darstellung der Erfindung

Der Erfindung liegt die Aufgabe zugrunde, ein im Hinblick auf das Verschleißverhalten verbessertes Motorbauteil zu schaffen, sowie eine Verwendung einer Gusseisenlegierung vorzuschlagen, mit der ein verbessertes Motorbauteil hergestellt werden kann.

Die Lösung dieser Aufgabe erfolgt zum einen durch das im Anspruch 1 beschriebene Motorbauteil.

Demzufolge besteht das neuartige Motorbauteil, bei dem es sich beispielsweise um eine Zylinderlaufbuchse, einen Motorkolben oder ein Teil davon, wie beispielsweise einen Ringträger oder eine Kolbennabenbuchse handeln kann, aus einer Gusseisenlegierung, die Zirkon als einen Legierungsbestandteil in einem Anteil von 0,1 % oder weniger enthält. Bei einer Analyse eines in dieser Weise hergestellten Motorbauteils hat sich herausgestellt, dass Zirkon in vorteilhafter Weise als Karbidbildner wirkt und insbesondere feine und gleichmäßig verteilte Sonderkarbide bildet, als dies bei den bislang bekannten für Motorbauteile verwendeten Gusseisenlegierungen der Fall ist. Ferner ergibt sich, dass in dem aus einer derartigen Legierung hergestellten Motorbauteil Graphit überwiegend als lamellare Graphitausscheidung ausgebildet ist, was das Verschleißverhalten weiter verbessert. Zirkon macht das Gefüge gleichmäßiger und homogener, was zu besserem Verschleißverhalten führt.

Versuche haben ergeben, dass die spezifische Verschleißrate, die zunächst im außermotorischen Verschleißtest gemessen wurde, weniger als die Hälfte des bislang verwendeten Werkstoffs beträgt. Eine weitere Verbesserung schafft der erfindungsgemäße Werkstoff im Hinblick auf den Wärmeausdehnungskoeffizienten. Hierbei ist zu beachten, dass der neuartige Werkstoff beispielsweise für einen Ringträger verwendet werden kann, der in einen Kolben eingegossen werden kann. Bei den im Motorbetrieb typischen Temperaturwechseln ergeben sich thermische Spannungen infolge von Unterschieden der Wärmeausdehnungskoeffizienten des Ringträgerwerkstoffs einerseits und des Kolbenwerkstoffs andererseits. Diese Spannungen sind umso geringer, je ähnlicher sich die thermischen Ausdehnungskoeffizienten sind. Für den erfindungsgemäßen Werkstoff wurde festgestellt, dass dieser deutlich näher an dem Wärmeausdehnungskoeffizienten der Kolbenlegierung liegt als die bislang bekannten Werkstoffe. Hierdurch können die Spannungen im Übergangsbereich zwischen dem eingegossenen Ringträger und dem Kolbenwerkstoff vermieden werden, so dass die Neigung zur Bildung von Rissen reduziert wird, und die Gefahr, dass sich der Ringträger löst und der Kolben damit ausfällt, deutlich verringert wird.

Schließlich wurde für den erfindungsgemäßen Werkstoff eine gegenüber dem bislang verwendeten Werkstoff erhöhte Wärmeleitfähigkeit festgestellt. Dies verbessert in vorteilhafter Weise die Wärmeabfuhr und erreicht dadurch eine Temperaturreduzierung in den Nuten, so dass das erfindungsgemäß hergestellte Motorbauteil auch in dieser Hinsicht verbessert ist.

Bevorzugte Weiterbildungen des erfindungsgemäßen Motorbauteils sind in den weiteren Ansprüchen beschrieben.

Für die Mindestmenge des erfindungsgemäß als Legierungsbestandteil verwendeten Zirkon ist ein Anteil von mindestens 0,01 % vorgesehen.

Es wird ferner die Verwendung von Nickel als Legierungsbestandteil, mit einem Anteil von 9,0 % bis 13,5 %, bevorzugt 10 % bis 12 % vorgesehen.

Es stellte sich ferner heraus, dass das erfindungsgemäß zugesetzte Zirkon als Zirkonkarbid insbesondere in Kombination mit Borkarbiden und/oder Chromkarbiden besonders stabile, feine und gleichmäßig verteilte Sonderkarbide bildet. Folglich wird vorgesehen, dass der Werkstoff des Motorbauteils Bor mit einem Anteil von 0,1 % oder weniger, bevorzugt mindestens 0,005 %, und/oder Chrom mit einem Anteil von 1,0 % bis 2,6 % enthält.

Besonders günstige Eigenschaften wurden darüber hinaus festgestellt, wenn der Werkstoff Kalzium als Legierungsbestandteil mit einem Anteil von 0,01 % oder weniger enthält.

Im Hinblick auf das Gefüge weist der erfindungsgemäße Gusseisenwerkstoff in vorteilhafter Weise ein im Wesentlichen austenitisches Gefüge auf.

Wie erwähnt, können die Verschleißeigenschaften insbesondere dadurch verbessert werden, dass der Werkstoff Graphit, überwiegend als lamellare Graphitausscheidung beinhaltet. Der Graphit kann ferner als Kugel- oder Vermikulargraphit, oder als Temperkohle vorliegen. Der Anteil des Graphits in der Form lamellarer Graphitausscheidungen beträgt dabei wenigstens 50 Vol.-%, bevorzugt wenigstens 75 Vol-%, besonders bevorzugt wenigstens 85 Vol.-%, und ist gleichmäßig verteilt durch Zirkon und/oder eine Impfbehandlung.

Die vorangehend beschriebenen vorteilhaften Eigenschaften im Hinblick auf den Wärmeausdehnungskoeffizienten können insbesondere dann erreicht werden, wenn dieser im Bereich von 18,5 ±1 x 10⁻⁶ mm/mm°C bei 50°C und 27,5 ±1 x 10⁻⁶ mm/mm°C bei 400°C liegt.

Im Hinblick auf die thermische Leitfähigkeit wurden besonders günstige Eigenschaften dann festgestellt, wenn diese im Bereich von 29,5 ±1 W/mK bei 50°C bis 27,5 ±1 W/mK bei 400°C liegt.

Die Erfindung schlägt darüber hinaus angesichts einer ähnlichen Legierung, die für Bremsträger bereits offenbart wurde, die Verwendung einer Gusseisenlegierung, die Zirkon als Legierungsbestandteil mit einem Anteil von mindestens 0.06 bis 0,1 % oder weniger enthält, als Bewehrungsmaterial für ein Motorbauteil, wie eine Zylinderlaufbuchse oder einen Motorkolben, insbesondere im Bereich der Ringnuten, besonders bevorzugt für einen Ringträger, vor. Durch den Einsatz einer derartigen Gusseisenlegierung für die Herstellung einer Zylinderlaufbuchse, eines Motorkolbens oder eines Ringträgers, oder für die Bewehrung von Bereichen, die in besonderer Weise dem Verschleiß ausgesetzt sind, wie der Bereich der Ringnuten eines Motorkolbens, können die oben beschriebenen verbesserten Produkte hergestellt werden.

### Kurze Beschreibung der Zeichnungen

- Fig. 1: zeigt ein Diagramm zum Vergleich der Wärmeausdehnungskoeffizienten des erfindungsgemäßen Werkstoffs eines Standardwerkstoffs und einer üblichen Kolbenlegierung; und
- Fig. 2: zeigt ein Diagramm zum Vergleich der thermischen Leitfähigkeit des erfindungsgemäßen Werkstoffs und eines Standardwerkstoffs.

### Ausführungsbeispiel

Mit der folgenden Legierung wurde der erfindungsgemäße Werkstoff hergestellt, und es wurden verschiedene Versuche durchgeführt:
- C:: 2,9 %
- Si:: 2,2 %
- Mn:: 1,5 %
- Cr:: 1,1 %
- Ni:: 11,1 %
- Cu:: 7,1 %
- B:: 0,01 %
- Zr:: 0,08 %
- S:: 0,04 %
- P:: 0,07 %
Rest Fe und unvermeidliche Verunreinigungen.

Zunächst wurden in einem außermotorischen Verschleißtest, die spezifische Verschleißrate gemessen. Für den als Vergleichsbeispiel verwendeten Standardwerkstoff wurde eine Rate von etwa 6 x 10⁻¹² m³/Nm festgestellt. Bei dem erfindungsgemäßen Werkstoff betrug diese lediglich etwa 3 x 10⁻¹² m³/Nm.

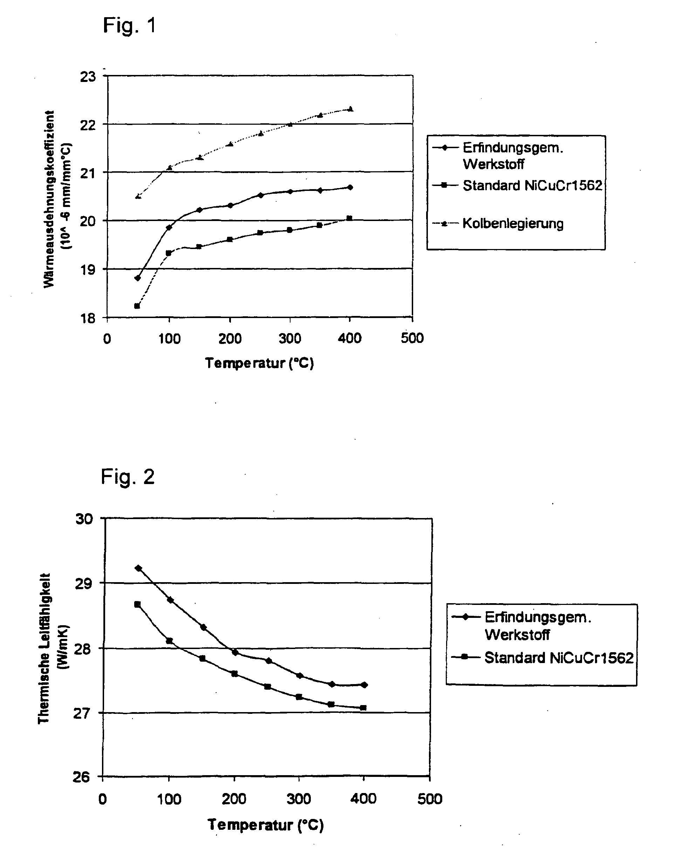

Ferner wurde der Wärmeausdehnungskoeffizient des erfindungsgemäßen Werkstoffs mit demjenigen eines Standardwerkstoffs und demjenigen einer üblichen Kolbenlegierung verglichen. Als Standardwerkstoff wurde NiCuCr1562 verwendet. Wie sich aus Fig. 1 ergibt, liegt der Wärmeausdehnungskoeffizient der Kolbenlegierung zwischen 20,5 und etwa 22,5 x 10⁻⁶ mm/mm°C. Bei dem Standardwerkstoff beträgt der Wärmeausdehnungskoeffizient zwischen etwa 18,2 und 20 x 10⁻⁶ mm/mm°C. Demgegenüber ist der Wärmeausdehnungskoeffizient bei dem erfindungsgemäßen Werkstoff im gesamten untersuchten Temperaturbereich um etwa 0,6 x 10⁻⁶ mm/mm°C höher. Der Wärmeausdehnungskoeffizient liegt somit näher an demjenigen der Kolbenlegierung, so dass nachteilige Effekte durch den Unterschied der Wärmeausdehnungskoeffizienten zwischen der Kolbenlegierung und der Ringträgerlegierung vermindert werden können.

Schließlich wurde die thermische Leitfähigkeit des oben beschriebenen Standardwerkstoffs mit derjenigen des erfindungsgemäßen Werkstoffs verglichen. Hierbei ergibt sich, wie in Fig. 2 dargestellt, dass der erfindungsgemäße Werkstoff bei sämtlichen gemessenen Temperaturen eine thermische Leitfähigkeit aufweist, die um etwa 0,5 bis 1,0 W/mK höher ist als diejenige des Standardwerkstoffs. Die im Bereich des Motors entstehende Wärme kann somit in vorteilhafter Weise besser abgeführt werden.

## Patentansprüche

1. Motorbauteil, wie z.B., Motorkolben oder ein Teil davon, wie z.B. Ringträger oder Kolbennabenbuchse, aus einer Gusseisenlegierung, die Zirkon als Legierungsbestandteil in einem Anteil von mindestens 0,01 und bis zu 0,1 % enthält und im Übrigen folgende Zusammensetzung aufweist:
C: 2,2 - 3,8 %
Si: 1,0 - 2,8 %
Mn: 1,0 - 2,0 %
Cr: 1,0 - 2,6 %
Ni: 9,0 - 13,5 %
Cu: 5,0 - 8,5 %
B: max. 0,1 %
Nb: max. 0,4 %
Ti: max. 0,3 %
Mo: max. 0,5 %
V: max. 0,5 %
Ca: max. 0,01 %
S: max. 0,10 %
P: max. 0,08 %
Rest Fe und unvermeidliche Verunreinigungen.

2. Motorbauteil nach Anspruch 1,
**dadurch gekennzeichnet, dass** die Gusseisenlegierung 10 % bis 12 % Nickel enthält.

3. Motorbauteil nach Anspruch 1 oder 2,
**dadurch gekennzeichnet, dass** die Gusseisenlegierung Bor mit einem Anteil von mindestens 0,005 % enthält.

4. Motorbauteil nach einem der vorangehenden Ansprüche,
**dadurch gekennzeichnet, dass** der Gusseisenwerkstoff ein im Wesentlichen austenitisches Gefüge aufweist.

5. Motorbauteil nach einem der vorangehenden Ansprüche,
**dadurch gekennzeichnet, dass** die Gusseisenlegierung Graphit, überwiegend als lamellare Graphitausscheidung beinhaltet.

6. Motorbauteil nach einem der vorangehenden Ansprüche,
**dadurch gekennzeichnet, dass** die Gusseisenlegierung einen Wärmeausdehnungskoeffizienten im Bereich von 18,5 ± 1 x 10⁻⁶ mm/mm°C bei 50°C und 27,5 ± 1 x 10⁻⁶ mm/mm°C bei 400°C aufweist.

7. Motorbauteil nach einem der vorangehenden Ansprüche,
**dadurch gekennzeichnet, dass** die Gusseisenlegierung eine thermische Leitfähigkeit im Bereich von 29,5 ± 1 W/mK bei 50°C und 27,5 ± 1 W/mK bei 400°C aufweist.

8. Verwendung einer Gusseisenlegierung, die Zirkon als Legierungsbestandteil mit einem Anteil von 0,1 % oder weniger, mindestens 0,01 %, enthält und im Übrigen die folgende Zusammensetzung aufweist:
C: 2,2 - 3,8 %
Si: 1,0 - 2,8 %
Mn: 1,0 - 2,0 %
Cr: 1,0 - 2,6 %
Ni: 9,0 - 13,5 %
Cu: 5,0 - 8,5 %
B: max. 0,1 %
Nb: max. 0,4 %
Ti: max. 0,3 %
Mo: max. 0,5 %
V: max. 0,5 %
Ca: max. 0,01 %
S : max. 0,10 %
P: max. 0,08 %
Rest Fe und unvermeidliche Verunreinigungen,
als Bewehrungsmaterial für ein Motorbauteil, wie einen Motorkolben, insbesondere im Bereich der Ringnuten oder Kolbennabenbuchsen, besonders bevorzugt für einen Ringträger.

## Claims

1. Engine component, such as for example engine piston or a part thereof, such as for example ring support or piston boss bushing, made from a cast iron alloy which contains zirconium as an alloy constituent in a proportion of at least 0.01 and up to 0.1 % and moreover has the following composition:
| | |
|---|---|
| C: | 2.2-3.8% |
| Si: | 1.0-2.8% |
| Mn: | 1.0-2.0% |
| Cr: | 1.0-2.6% |
| Ni: | 9.0-13.5% |
| Cu: | 5.0-8.5% |
| B: | maximum 0.1 % |
| Nb: | maximum 0.4 % |
| Ti: | maximum 0.3 % |
| Mo: | maximum 0.5 % |
| V: | maximum 0.5 % |
| Ca: | maximum 0.01 % |
| S: | maximum 0.10 % |
| P: | maximum 0.08 % |
| remainder | Fe and unavoidable contaminants. |

2. Engine component according to claim 1, **characterised in that** the cast iron alloy contains 10 % to 12 % of nickel.

3. Engine component according to claim 1 or 2, **characterised in that** the cast iron alloy contains boron having a proportion of at least 0.005 %.

4. Engine component according to one of the preceding claims, **characterised in that** the cast iron material has an essentially austenitic structure.

5. Engine component according to one of the preceding claims, **characterised in that** the cast iron alloy contains graphite, predominantly as flake graphite precipitation.

6. Engine component according to one of the preceding claims, **characterised in that** the cast iron alloy has a coefficient of thermal expansion in the range from 18.5 ± 1 x 10⁻⁶ mm/mm°C at 50°C and 27.5 ± 1 x 10⁻⁶ mm/mm°C at 400°C.

7. Engine component according to one of the preceding claims, **characterised in that** the cast iron alloy has a thermal conductivity in the range from 29.5 ± 1 W/mK at 50°C and 27.5 ± 1 W/mK at 400°C.

8. Use of a cast iron alloy which contains zirconium as an alloy constituent having a proportion of 0.1 % or less, at least 0.01 %, and moreover has the following composition:
| | |
|---|---|
| C: | 2.2-3.8% |
| Si: | 1.0-2.8% |
| Mn: | 1.0-2.0% |
| Cr: | 1.0-2.6% |
| Ni: | 9.0-13.5% |
| Cu: | 5.0-8.5% |
| B: | maximum 0.1 % |
| Nb: | maximum 0.4 % |
| Ti: | maximum 0.3 % |
| Mo: | maximum 0.5 % |
| V: | maximum 0.5 % |
| Ca: | maximum 0.01 % |
| S: | maximum 0.10 % |
| P: | maximum 0.08 % |
| remainder | Fe and unavoidable contaminants |
as reinforcing material for an engine component, such as an engine piston, in particular in the region of the ring grooves or piston boss bushings, particularly preferably for a ring support.

## Revendications

1. Composant de moteur, tel que, par exemple, piston de moteur ou une partie de celui-ci, tel que, par exemple, support de segment ou douille de moyeu de piston, composé d'un alliage de fonte, contenant du zircon en tant que composant d'alliage, en une proportion d'au moins 0,01 et allant jusqu'à 0,1 % et présentant au reste la composition suivante :
C : 2,2 à 3,8%
Si : 1,0 à 2,8 %
Mn : 1,0 à 2,0 %
Cr : 1,0 à 2,6 %
Ni : 9,0 à 13,5 %
Cu: 5,0 à 8,5 %
B : max. 0,1 %
Nb : max. 0,4 %
Ti : max. 0,3 %
Mo : max. 0,5
V : max. 0,5 %
Ca : max. 0,01 %
S : max. 0,10 %
P : max. 0,08 %
le reste étant du Fe et d'inévitables impuretés.

2. Composant de moteur selon la revendication 1,
**caractérisé en ce que** l'alliage de fonte contient de 10 % à 12 % de nickel.

3. Composant de moteur selon la revendication 1 ou 2,
**caractérisé en ce que** l'alliage de fonte contient du bore en une proportion d'au moins 0,005 %.

4. Composant de moteur selon l'une des revendications précédentes,
**caractérisé en ce que** le matériau qu'est la fonte présente une structure essentiellement austénitique.

5. Composant de moteur selon l'une des revendications précédentes,
**caractérisé en ce que** l'alliage de fonte contient du graphite, principalement sous forme de dépôt de graphite lamellaire.

6. Composant de moteur selon l'une des revendications précédentes,
**caractérisé en ce que** l'alliage de fonte présente un coefficient de dilatation thermique dans la fourchette de 18,5 ± 1 x 10⁻⁶ mm/mm°C à 50°C et 27,5 ± 1 x 10⁻⁶ mm/mm°C à 400°C.

7. Composant de moteur selon l'une des revendications précédentes,
**caractérisé en ce que** l'alliage de fonte présente une conductivité thermique dans la fourchette de 29,5 ± 1 W/mK à 50°C et 27,5 ± 1 W/mK à 400°C.

8. Utilisation d'un alliage de fonte, contenant du zircon en tant que composant d'alliage, en une proportion de 0,1 % ou moins et présentant au reste la composition suivante :
C : 2,2 à 3,8 %
Si : 1,0 à 2,8 %
Mn : 1,0 à 2,0 %
Cr : 1,0 à 2,6 %
Ni : 9,0 à 13,5 %
Cu: 5,0 à 8,5 %
B : max. 0,1 %
Nb : max. 0,4 %
Ti : max. 0,3 %
Mo : max. 0,5 %
V : max. 0,5
Ca : max. 0,01 %
S : max. 0,10 %
P : max. 0,08 %
le reste étant du Fe et d'inévitables impuretés,
en tant que matériau d'armature pour un composant de moteur, tel qu'un piston de moteur, en particulier dans la zone des rainures de segment ou des douilles de moyeu de piston, de manière particulièrement préférée pour un support de segment.
